# EUROPEAN PATENT SPECIFICATION

(11) **EP 2 889 183 B1**
(45) Date of publication and mention of the grant of the patent: **13.06.2018**
(21) Application number: 14198076.3
(22) Date of filing: 15.12.2014
(51) Int. Cl.: B60R 1/08

(54) **VEHICLE REAR VIEW MIRROR ASSEMBLY**
FAHRZEUGRÜCKSPIEGELANORDNUNG
ENSEMBLE DE RÉTROVISEUR DE VÉHICULE

(30) Priority: 24.12.2013 TW 102224330
(43) Date of publication of application: 01.07.2015
(73) Proprietor: Tseng, Wen-Pin, Changhua County (TW)
(72) Inventor: Tseng, Wen-Pin, Changhua County (TW)
(74) Representative: Lang, Christian

(56) References cited:
- EP-A2- 1 415 858
- US-A- 4 714 322
- US-A- 5 115 352
- US-A- 5 295 021
- US-A- 5 432 643
- US-A- 5 946 151

## Description

### FIELD OF THE INVENTION

The present invention relates to a vehicle rear view mirror assembly in which an auxiliary lens is further rotated to adjust an angle between the auxiliary lens and a main lens, after the main lens is adjusted toward a desired position by a driver, thus increasing a visible range.

### BACKGROUND OF THE INVENTION

A conventional rear view mirror is mounted on a front end of a vehicle so that a driver learns driving states while driving a car. However, some blind spots cannot be seen clearly because of a limited visible range of the conventional rear view mirror.

The present invention has arisen to mitigate and/or obviate the afore-described disadvantages.

From document US 5 295 021 A a rear view mirror assembly is known comprising a base and three angle adjustable lenses connected to the base via ball and socket joints allowing to adjust the angles between the base and the mirror plane of each lens individually.

From document US 5 946 151 A a rear view mirror assembly is known comprising a base and an angle adjustable lens connected to the base via a positioning portion formed on the base and a connecting portion formed on the lens.
US 4 714 322 A discloses a rear view mirror assembly with a multi-segmented prismoidal mirror. A central segment of the mirror is rigidly fixed to a mirror housing, while adjacent segments are hinged vertically to it to allow for an adjustable panoramic view, US 5 432 643 A describes a vehicle rear view mirror assembly according to the preamble of claim 1. The device comprises a circular auxiliary mirror which is rotatably fixed at an angle to a base which can be affixed to the mirror surface of the rear view mirror.

### SUMMARY OF THE INVENTION

The primary object of the present invention is to provide a vehicle rear view mirror assembly in which an auxiliary lens is further rotated to adjust an angle between the auxiliary lens and a main lens, after the main lens is adjusted toward a desired position by a driver, thus increasing a visible range.

To obtain the above object, a vehicle rear view mirror assembly according to claim 1 is provided. Advantageous embodiments are defined in the dependent claims.

A vehicle rear view mirror assembly by the present invention contains: a base for
fixing a main lens and an auxiliary lens.

The base includes a positioning portion defined on one side thereof, and the auxiliary lens includes a connecting portion for corresponding to the positioning portion of the base, such that the auxiliary lens is rotatably fixed in the positioning portion of the base.

The positioning portion is formed in a groove shape and has an inner arcuate face defined on an inner wall thereof, the connecting portion is a sleeve retained with the positioning portion and has an outer arcuate face defined on an outer wall thereof to contact with the inner arcuate face

### BRIEF DESCRIPTION OF THE DRAWINGS

FIG. 1 is a perspective view showing the assembly of a vehicle rear view mirror assembly according to a first embodiment of the present invention.
FIG. 2 is a perspective view showing the exploded components of a part of the vehicle rear view mirror assembly according to the first embodiment of the present invention.
FIG. 3 is a cross sectional view taken along the line 3-3 of FIG. 2.
FIG. 4 is a perspective view showing the assembly of a vehicle rear view mirror assembly according to a second embodiment of the present invention.
FIG. 5 is a perspective view showing the exploded components of a part of the vehicle rear view mirror assembly according to the second embodiment of the present invention.
FIG. 6 is a perspective view showing the exploded components of a vehicle rear view mirror assembly according to a third embodiment of the present invention.
FIG. 7 is a perspective view showing the exploded components of a part of the vehicle rear view mirror assembly according to the third embodiment of the present invention.
FIG. 8 is a cross sectional view taken along the line 8-8 of FIG. 6.

### DETAILED DESCRIPTION OF THE PREFERRED EMBODIMENTS

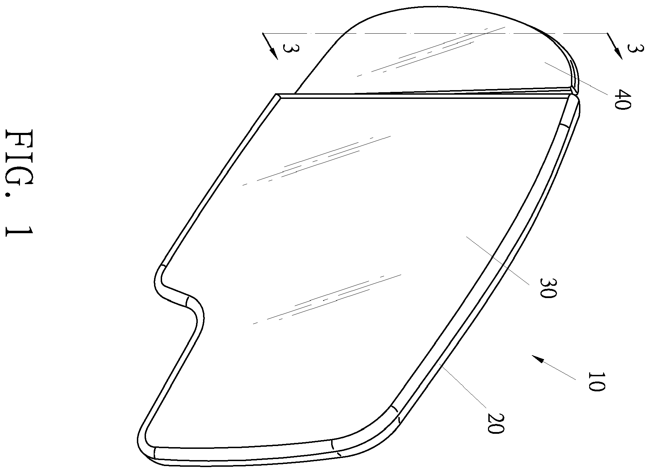

With reference to FIG. 1, a vehicle rear view mirror assembly 10 according to a first embodiment of the present invention comprises: a base 20 for fixing a main lens 30 and an auxiliary lens 40 which is a flat lens and is rotated relative to the base 20 to adjust an angle between the auxiliary lens 40 and the main lens 30.

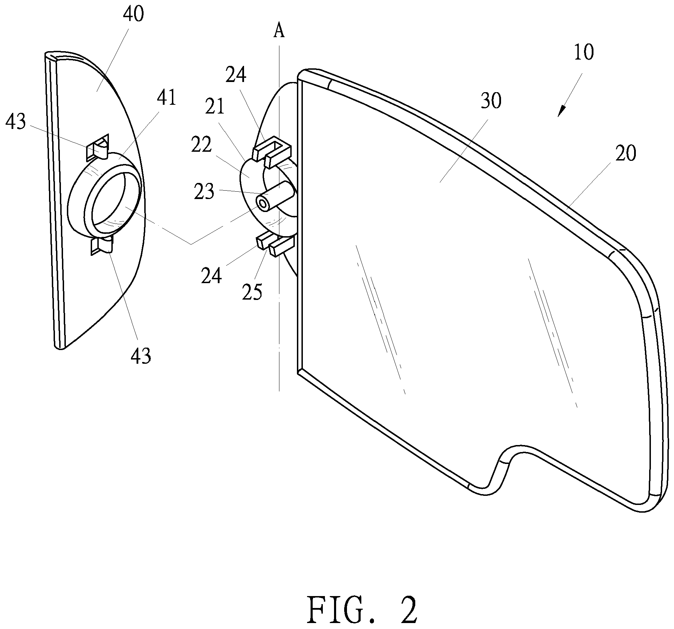

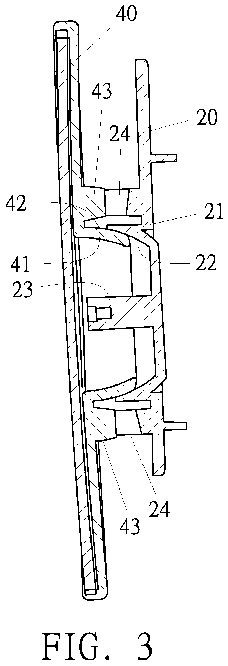

Referring further to FIG. 2, the base 20 includes a positioning portion 21 defined on one side thereof and formed in a circular groove shape, the positioning portion 21 has an inner arcuate face 22 defined on an inner wall thereof (as shown in FIG. 3) and has a limiting post 23 extending outwardly to the auxiliary lens 40 from a bottom end thereof. The base 20 also includes two guiding members 24 disposed on an outer wall of the positioning portion 21, wherein the two guiding members 24 are arranged on a straight line A, and each guiding member 24 has a recess 25 defined therein.

The auxiliary lens 40 includes a connecting portion 41 for corresponding to the positioning portion 21 of the base 20. In this embodiment, the connecting portion 41 is an annular sleeve retained with the positioning portion 21 and has an outer arcuate face 42 defined on an outer wall thereof to contact with the inner arcuate face 22, such that the auxiliary lens 40 is rotatably fixed in the base 20. Furthermore, the auxiliary lens 40 also includes two guided portions 43, each being formed in a column shape to correspond to each of the two guiding members 24, such that when the auxiliary lens 40 is fixed in the base 20, the two guided portions 43 are inserted into two recesses 25 of the two guiding members 24, and the auxiliary lens 40 is guided by the two guiding members 24 to rotate through a virtual plane of the straight line A.

As shown in FIG. 3, a rotating angle of the auxiliary lens 40 is limited by the limiting post 23, in other words, when the auxiliary lens 40 is rotated to a maximum rotating angle, a back surface of the auxiliary lens 40 contacts with a top surface of the limiting post 23.

It is to be noted that the positioning portion 21 and the connecting portion 41 is one embodiment of the present invention, any configurations for retaining the positioning portion 21 with the connecting portion 41 are in a scope of the present invention.

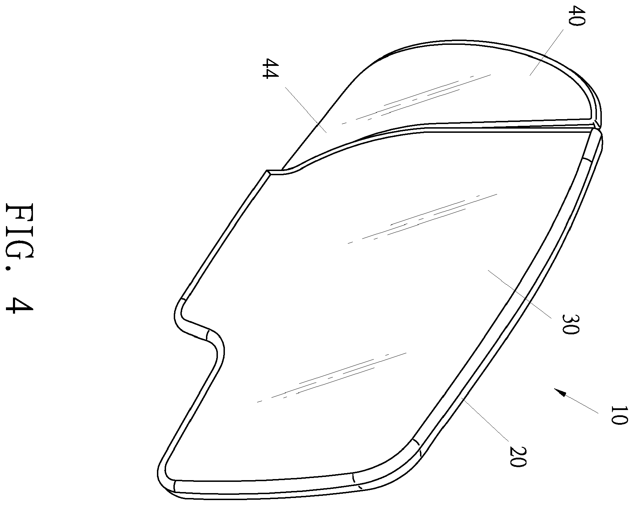

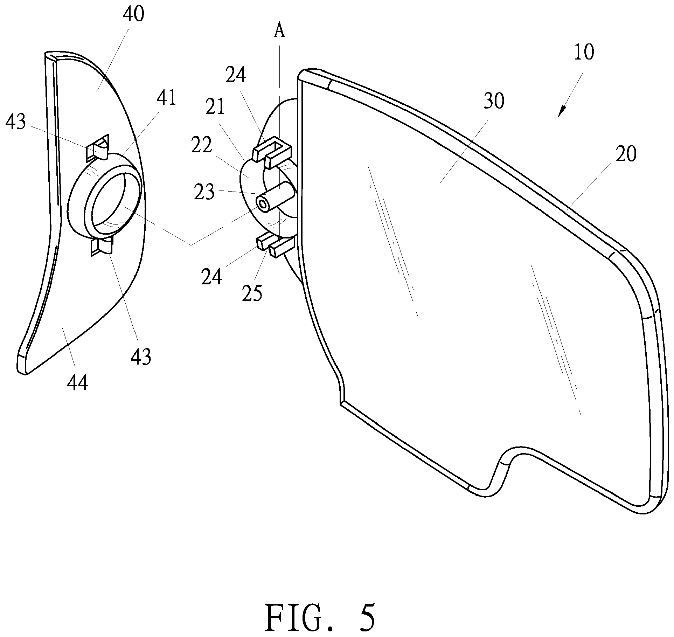

As shown in FIGS. 4 and 5, a difference of a vehicle rear view mirror assembly 10 of a second embodiment from that of the first embodiment comprises: a cusp-shaped extending section 44 extending to the main lens 30 from a lower side of the auxiliary lens 40, thus increasing a visible range.

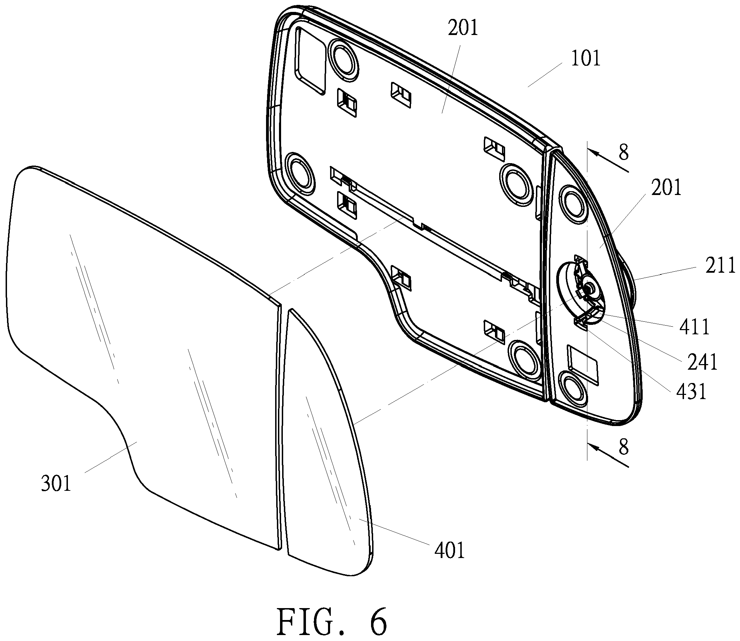

As shown in FIG. 6, a vehicle rear view mirror assembly 101 according a third embodiment of the present invention comprises: a base 201 for fixing a main lens 301 and an auxiliary lens 401 which is a flat lens and is rotated relative to the base 201 to adjust an angle between the auxiliary lens 401 and the main lens 301.

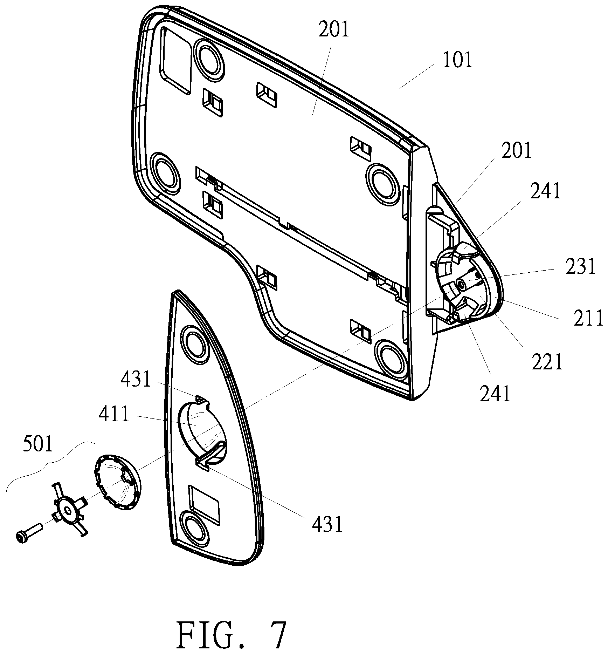

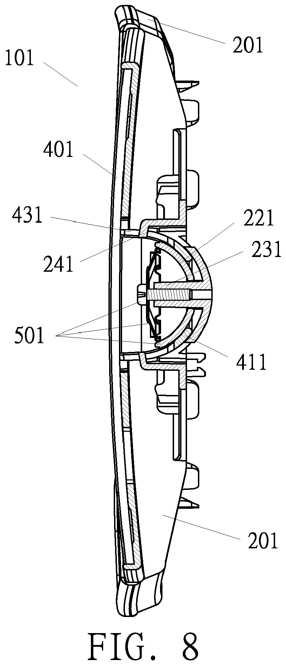

With reference to FIG. 7, the base 201 includes a positioning portion 211 defined on one side thereof and formed in a circular groove shape, the positioning portion 211 has an inner arcuate face 221 defined on an inner wall thereof (as shown in FIG. 8) and has a limiting post 231 extending outwardly to the auxiliary lens 401 from a bottom end thereof and connecting with a confining element 501. The base 201 also includes two guiding members 241 disposed on an outer wall of the positioning portion 211, wherein the two guiding members 241 are arranged on a straight line A.

The auxiliary lens 401 includes a connecting portion 411 for corresponding to the positioning portion 211 of the base 201. In this embodiment, the connecting portion 411 is a semispherical block retained with the positioning portion 211 and has an outer arcuate face defined on an outer wall thereof to contact with the inner arcuate face 221, such that the auxiliary lens 401 is rotatably fixed in the base 201. Furthermore, the auxiliary lens 401 also includes two guided portions 431, each being formed in a notch shape to correspond to each of the two guiding members 241, such that when the auxiliary lens 401 is fixed in the base 201, the two guided portions 431 are inserted into the two guiding members 241, and the auxiliary lens 401 is guided by the two guiding members 241 to rotate through a virtual plane of the straight line.

Thereby, after the main lens is adjusted toward a desired position by a driver, the auxiliary lens is rotated further to adjust the angle between the auxiliary lens and the main lens, thus increasing the visible range.

## Claims

1. A vehicle rear view mirror assembly (10, 101) comprising: a base (20, 201) for fixing a main lens (30, 301) and an auxiliary lens (40, 401),
the base (20, 201) including a positioning portion (21, 211) defined on one side thereof, the auxiliary lens (40, 401) includes a connecting portion (41, 411) for corresponding to the positioning portion (21, 211) of the base (20, 201), such that the auxiliary lens (40, 401) is rotatably fixed in the positioning portion (21, 211) of the base, wherein the base (20, 201) includes a flat face arranged on a main portion of the base (20, 201) and configured to connect with the main lens (30, 301), and the base (20, 201) also includes a second face, wherein the second face has the positioning portion (21, 211); **characterized in that** the second face of the base (20, 201) extends from the one side of the base (20, 201) in parallel to the flat face but in a different plane so that the second face is lower than the main flat face of the base (20, 201) so that the auxiliary lens (40, 401), which is a flat lens, after being connected with the positioning portion (21, 211) is adjustable to be arranged in a way so that the auxiliary lens (40) extends in parallel to the main lens (30, 301).

2. The vehicle rear view mirror assembly (10, 101) as claimed in claim 1, wherein the positioning portion (21, 211) is formed in a groove shape and has an inner arcuate face (22, 221) defined on an inner wall thereof, the connecting portion (41, 411) is a sleeve retained with the positioning portion (21, 211) and has an outer arcuate face (42) defined on an outer wall thereof to contact with the inner arcuate face (22, 221).

3. The vehicle rear view mirror assembly (10, 101) as claimed in claim 2, wherein the groove is circular, and the sleeve is annular.

4. The vehicle rear view mirror assembly (10, 101) as claimed in claim 1 or 2, wherein the base (20, 201) also includes at least one guiding member (24, 241) disposed on an outer wall of the positioning portion (21, 211), and the auxiliary lens (40, 401) also includes at least one guided portion (43, 431) for corresponding to the at least one guiding member (24, 241).

5. The vehicle rear view mirror assembly (10, 101) as claimed in claim 4, wherein each of the at least one guiding member (24, 241) has a recess (25) defined therein, and each of the at least one guided portion (43, 431) is formed in a column shape to insert into the recess (25).

6. The vehicle rear view mirror assembly (10, 101) as claimed in claim 5, wherein a number of the at least one guiding member (24, 241) is two, a number of the at least one guided portion (43, 431) is two, and the two guiding members (24, 241) are arranged on a straight line.

7. The vehicle rear view mirror assembly (10, 101) as claimed in claim 6, wherein the positioning portion (21, 211) has a limiting post (23, 231) extending outwardly to the auxiliary lens (40, 401) from a bottom end thereof.

8. The vehicle rear view mirror assembly (10, 101) as claimed in claim 1, wherein the auxiliary lens (40, 401) further includes an extending section (44) extending to the main lens (30, 301) from a lower side thereof.

9. The vehicle rear view mirror assembly (10, 101) as claimed in claim 8, wherein the extending section (44) is formed in a cusp shape.

## Patentansprüche

1. Fahrzeugrückspiegelanordnung (10, 101), welche Folgendes umfasst:
eine Basis (20, 201) zum Befestigen einer Hauptscheibe (30, 301) und einer Nebenscheibe (40,401),
wobei die Basis (20, 201) einen an einer Seite davon definierten Positionierbereich (21, 211) enthält, wobei die Nebenscheibe (40, 401) einen Verbindungsbereich (41, 411) zum Korrespondieren mit dem Positionierbereich (21, 211) der Basis (20, 201) aufweist, sodass die Nebenscheibe (40, 401) in dem Positionierbereich (21, 211) der Basis drehbar befestigt ist, wobei die Basis (20, 201) eine ebene Fläche enthält, welche an einem Hauptbereich der Basis (20, 201) angeordnet und zum Verbinden mit der Hauptscheibe (30, 301) gestaltet ist, und die Basis (20, 201) ebenfalls eine zweite Fläche enthält, wobei die zweite Fläche den Positionierbereich (21, 211) aufweist,
**dadurch gekennzeichnet, dass**
sich die zweite Fläche der Basis (20, 201) von der einen Seite der Basis (20, 201) parallel zu der ebenen Fläche, jedoch in einer unterschiedlichen Ebene, erstreckt, sodass die zweite Fläche tiefer als die ebene Hauptfläche der Basis (20, 201) ist, sodass die Nebenscheibe (40, 401), welche eine ebene Scheibe ist, nach dem Verbinden mit dem Positionierbereich (21, 211) angepasst werden kann, um derart angeordnet zu sein, dass sich die Nebenscheibe (40) parallel zu der Hauptscheibe (30, 301) erstreckt.

2. Fahrzeugrückspiegelanordnung (10, 101) nach Anspruch 1, wobei der Positionierbereich (21, 211) in der Form einer Hohlkehle ausgebildet ist und eine innere gekrümmte Fläche (22, 221) aufweist, welche an einer inneren Wand davon definiert ist, wobei der Verbindungsbereich (41, 411) eine mit dem Positionierbereich (21, 211) arretierte Hülse ist und eine äußere gekrümmte Fläche (42) aufweist, welche an einer äußeren Wand davon zum Kontaktieren mit der inneren gekrümmten Fläche (22, 221) definiert ist.

3. Fahrzeugrückspiegelanordnung (10, 101) nach Anspruch 2, wobei die Hohlkehle kreisförmig ist und die Hülse ringförmig ist.

4. Fahrzeugrückspiegelanordnung (10, 101) nach Anspruch 1 oder 2, wobei die Basis (20, 201) ebenfalls mindestens ein an einer äußeren Wand des Positionierbereichs (21, 211) angeordnetes Führungselement (24, 241) enthält und die Nebenscheibe (40, 401) ebenfalls mindestens einen geführten Bereich (43, 431) zum Korrespondieren mit dem mindestens einen Führungselement (24, 241) enthält.

5. Fahrzeugrückspiegelanordnung (10, 101) nach Anspruch 4, wobei jedes von mindestens einem Führungselement (24, 241) eine darin definierte Aussparung (25) aufweist und jeder von mindestens einem geführten Bereich (43, 431) säulenförmig zum Einsetzen in die Aussparung (25) ausgebildet ist.

6. Fahrzeugrückspiegelanordnung (10, 101) nach Anspruch 5, wobei eine Anzahl des mindestens einen Führungselements (24, 241) zwei ist, eine Anzahl des mindestens einen geführten Bereichs (43, 431) zwei ist und die zwei Führungselemente (24, 241) in einer geraden Linie angeordnet sind.

7. Fahrzeugrückspiegelanordnung (10, 101) nach Anspruch 6, wobei der Positionierbereich (21, 211) einen Abgrenzungspfosten (23, 231) aufweist, welcher sich nach außen in Richtung der Nebenscheibe (40, 401) von einem unteren Ende davon erstreckt.

8. Fahrzeugrückspiegelanordnung (10, 101) nach Anspruch 1, wobei die Nebenscheibe (40, 401) ferner einen sich erstreckenden Abschnitt (44) enthält, welcher sich in Richtung der Hauptscheibe (30, 301) von einer unteren Seite davon erstreckt.

9. Fahrzeugrückspiegelanordnung (10, 101) nach Anspruch 8, wobei der sich erstreckende Abschnitt (44) in der Form einer Spitze ausgebildet ist.

## Revendications

1. Ensemble à rétroviseur de véhicule (10, 101), comprenant une base (20, 201) pour fixer un verre principal (30, 301) et un verre auxiliaire (40, 401),
la base (20, 201) incluant une portion de positionnement (21, 211) définie sur un côté de celle-ci, le verre auxiliaire (40, 401) inclut une portion de raccordement (41, 411) pour correspondre à la portion de positionnement (21, 211) de la base (20, 201), de telle sorte que le verre auxiliaire (40, 401) soit fixée de façon rotative dans la portion de positionnement (21, 211) de la base, dans lequel la base (20, 201) inclut une face plate agencée sur une portion principale de la base (20, 201) et configurée pour se raccorder au verre principal (30, 301), et la base (20, 201) inclut également une seconde face, dans lequel la seconde face possède la portion de positionnement (21, 211);
**caractérisé en ce que**
la seconde face de la base (20, 201) s'étend à partir de l'un côté de la base (20, 201) en parallèle à la face plate mais dans un plan différent pour que la seconde face soit plus basse que la face plate principale de la base (20, 201) pour que le verre auxiliaire (40, 401), qui est un verre plat, après avoir été raccordé à la portion de positionnement (21, 211) soit ajustable pour être agencé de manière telle que le verre auxiliaire (40) s'étende en parallèle au verre principal (30, 301).

2. Ensemble à rétroviseur de véhicule (10, 101) selon la revendication 1, dans lequel la portion de positionnement (21, 211) présente une forme de rainure et possède une face arquée intérieure (22, 221) définie sur une paroi intérieure de celle-ci, la portion de raccordement (41, 411) est un manchon retenu avec la portion de positionnement (21, 211) et possède une face arquée extérieure (42) définie sur une paroi extérieure de celle-ci pour entrer en contact avec la face arquée intérieure (22, 221).

3. Ensemble à rétroviseur de véhicule (10, 101) selon la revendication 2, dans lequel la rainure est circulaire, et le manchon est annulaire.

4. Ensemble à rétroviseur de véhicule (10, 101) selon la revendication 1 ou 2, dans lequel la base (20, 201) inclut également au moins un élément de guidage (24, 241) disposé sur une paroi extérieure de la portion de positionnement (21, 211), et le verre auxiliaire (40, 401) inclut également au moins une portion guidée (43, 431) pour correspondre à l'au moins un élément de guidage (24, 241).

5. Ensemble à rétroviseur de véhicule (10, 101) selon la revendication 4, dans le quel chacun de l'au moins un élément de guidage (24, 241) possède un évidement (25) défini dans celui-ci, et chacune de l'au moins une portion guidée (43, 431) présente une forme de colonne pour s'insérer dans l'évidement (25).

6. Ensemble à rétroviseur de véhicule (10, 101) selon la revendication 5, dans lequel un nombre de l'au moins un élément de guidage (24, 241) est de deux, un nombre de l'au moins une portion guidée (43, 431) est de deux, et les deux éléments de guidage (24, 241) sont agencés sur une ligne droite.

7. Ensemble à rétroviseur de véhicule (10, 101) selon la revendication 6, dans lequel la portion de positionnement (21, 211) possède un montant de limitation (23, 231) s'étendant vers l'extérieur vers le verre auxiliaire (40, 401) à partir d'une extrémité inférieure de celle-ci.

8. Ensemble à rétroviseur de véhicule (10, 101) selon la revendication 1, dans lequel le verre auxiliaire (40, 401) inclut en outre une section d'extension (44) s'étendant vers le verre principal (30, 301) à partir d'un côté inférieur de celui-ci.

9. Ensemble à rétroviseur de véhicule (10, 101) selon la revendication 8, dans lequel la section d'extension (44) présente une forme de pointe.
